# EUROPEAN PATENT APPLICATION

(11) **EP 4 838 983 A1**
(43) Date of publication of application: **11.11.2026**
(21) Application number: 25734177.6
(22) Date of filing: 02.01.2025
(51) Int. Cl.: H04W 72/1268, H04W 72/0446, H04W 72/21, H04W 72/23, H04W 28/04

(54) **METHOD AND DEVICE FOR PERFORMING UPLINK TRANSMISSION AND RECEPTION IN WIRELESS COMMUNICATION SYSTEM**

(30) Priority: 05.01.2024 US 202463617773 P
(71) Applicant: LG Electronics Inc., Yeongdeungpo-gu Seoul 07336 (KR)
(72) Inventor: KANG, Jiwon, Seoul 06772 (KR); YANG, Suckchel, Seoul 06772 (KR); KIM, Kijun, Seoul 06772 (KR); KIM, Hyungtae, Seoul 06772 (KR); KIM, Seonwook, Seoul 06772 (KR)
(74) Representative: Frenkel, Matthias Alexander
(86) International application number: PCT/KR2025/000015
(87) International publication number: WO 2025/147085

(57) **Abstract**

A method and device for performing uplink transmission and reception in a wireless communication system are disclosed. A method according to one embodiment of the present disclosure may include receiving, by a user equipment (UE), configuration information related to at least one of a first resource or a second resource from a base station; based on an occurrence of an event, transmitting, by the UE, first information to the base station based on the first resource; and transmitting, by the UE, second information to the base station based on the first information and the second resource, and the first information may include at least one of i) third information related to whether the event has occurred or ii) fourth information related to at least one of the second resource or the second information, and a minimum interval between a first transmission occasion (TO) for the first information and a second TO for the second information may be a first time period.

## Description

### [TECHNICAL FIELD]

The present disclosure relates to a wireless communication system, and more particularly, to a method and device for performing uplink transmission and reception in a wireless communication system.

### [Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

### [Disclosure]

### [Technical Problem]

The technical problem of the present disclosure is to provide a method and device for performing uplink transmission and reception in a wireless communication system.

In addition, the additional technical problem of the present disclosure is to provide a method and device for performing a two-step event-based transmission and reception and reporting procedure.

The technical objects to be achieved by the present disclosure are not limited to the above-described technical objects, and other technical objects which are not described herein will be clearly understood by those skilled in the pertinent art from the following description.

### [Technical Solution]

A method according to one embodiment of the present disclosure may include receiving, by a user equipment (UE), configuration information related to at least one of a first resource or a second resource from a base station; based on an occurrence of an event, transmitting, by the UE, first information to the base station based on the first resource; and transmitting, by the UE, second information to the base station based on the first information and the second resource, and the first information may include at least one of i) third information related to whether the event has occurred or ii) fourth information related to at least one of the second resource or the second information, and a minimum interval between a first transmission occasion (TO) for the first information and a second TO for the second information may be a first time period.

A method according to one embodiment of the present disclosure may include transmitting, by a base station, configuration information related to at least one of a first resource or a second resource to a user equipment (UE); based on an occurrence of an event, receiving, by the base station, first information based on the first resource from the UE; and receiving, by the base station, second information from the UE based on the first information and the second resource, and the first information may include at least one of i) third information related to whether the event has occurred or ii) fourth information related to at least one of the second resource or the second information, and a minimum interval between a first transmission occasion (TO) for the first information and a second TO for the second information may be a first time period.

### [Technical Effects]

According to various embodiments of the present disclosure, a method and device for performing uplink transmission and reception in a wireless communication system may be provided.

In addition, according to various embodiments of the present disclosure, a method and device for performing a two-step event-based transmission and reception and reporting procedure may be provided.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 is a flowchart for describing a method for a terminal to perform a communication procedure according to an embodiment of the present disclosure.
FIG. 8 is a flowchart for describing a method for a base station to perform a communication procedure according to an embodiment of the present disclosure.
FIG. 9 is a diagram for describing a signaling process according to an embodiment of the present disclosure.
FIG. 10 is a diagram illustrating a block diagram of a wireless communication device according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point(AP), a Network(5G network), an AI(Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS(Universal Mobile Telecommunications System). 3GPP(3rd Generation Partnership Project) LTE(Long Term Evolution) is a part of an E-UMTS(Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212(multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC(massive MTC), URLLC(Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

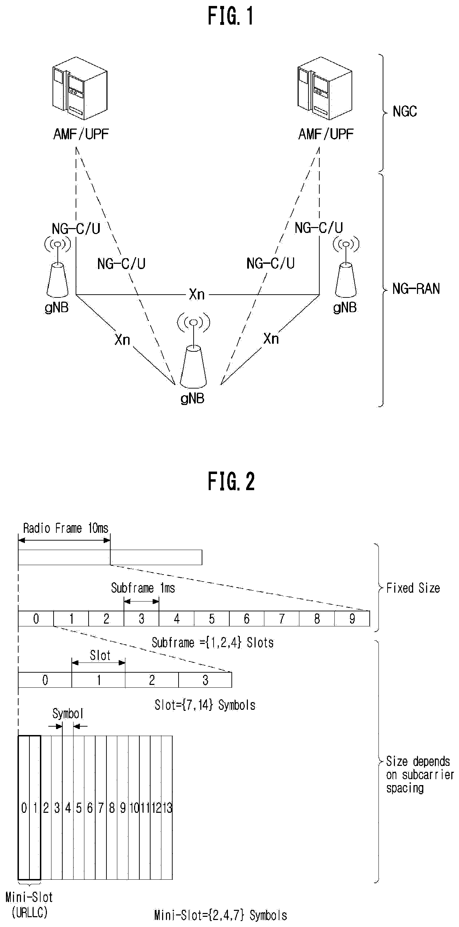

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/(Δfₘₐₓ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100)·T_{c}=10ms. Here, a radio frame is configured with 10 subframes having a duration of T_{sf}=(ΔfₘₐₓN_{f}/1000)·T_{c}=1ms, respectively. In this case, there may be one set of frames for an uplink and one set of frames for a downlink. In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈{0,..., Nₛₗₒₜ^{subframe,µ}-1} in a subframe and are numbered in an increasing order of n_{s,f}^{µ}∈{0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used.

Table 3 represents the number of OFDM symbols per slot (N_{symb}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe, µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame, µ} | Nₛₗₒₜ^{subframe, µ} |
|---|---|---|---|
| 2 | 12 | 40 | 4 |

FIG. 2 is an example on µ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

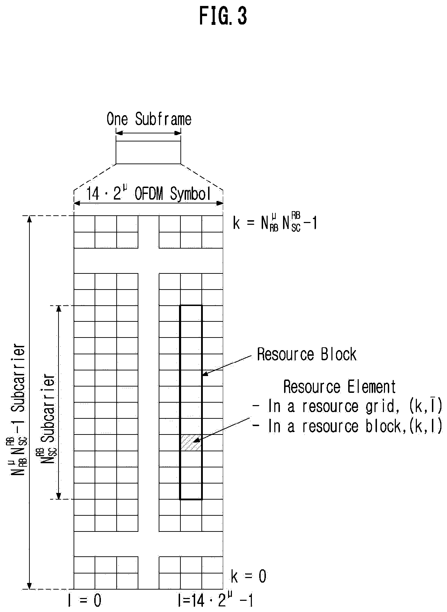

FIG. 3 illustrates a resource grid in a wireless communication system to which the present disclosure may be applied. In reference to FIG. 3, it is illustratively described that a resource grid is configured with N_{RB}^{µ}N_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p. Each element of a resource grid for µ and an antenna port p is referred to as a resource element and is uniquely identified by an index pair (k,l').

Here, k=0,...,N_{RB}^{µ}N_{sc}^{RB}-1 is an index in a frequency domain and l'=0,...,2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain.

Point A plays a role as a common reference point of a resource block grid and is obtained as follows.

offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.

absoluteFrequencyPointA represents a frequency-position of point A expressed as in ARFCN (absolute radio-frequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. [Equation 1] ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. [Equation 2] ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

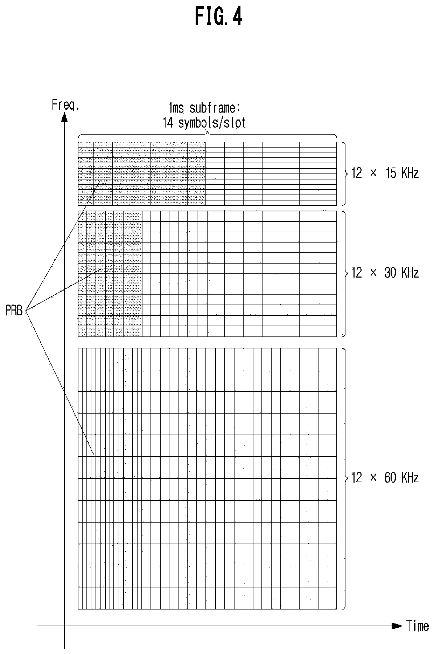

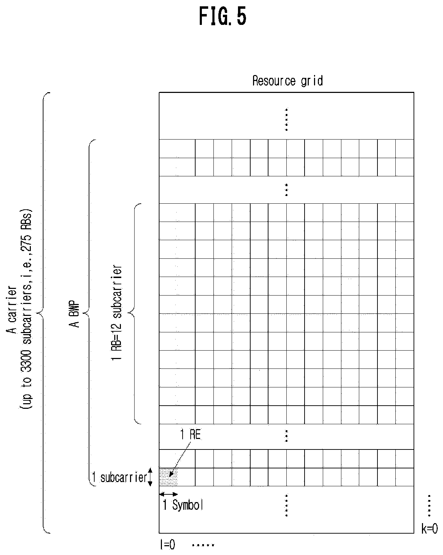

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP.

Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC.

A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

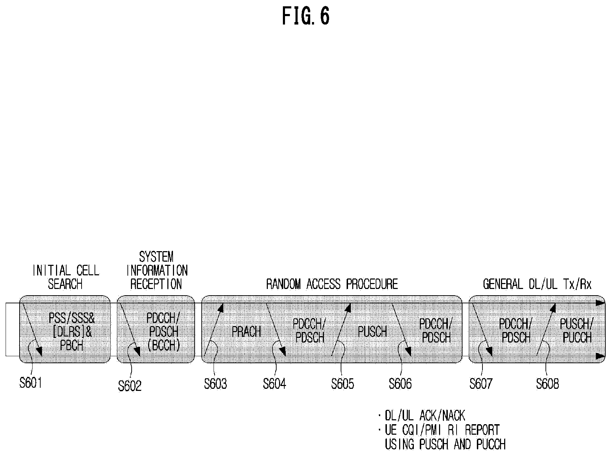

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH(Physical Uplink Shared Channel)/PUCCH(physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted. DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted. DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB)(e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined.

DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Basic beam failure recovery (BFR)

The UE and/or the base station may perform uplink/downlink beam management (BM) for data transmission/reception. Here, BM may refer to a process of obtaining and maintaining a beam set that can be used for downlink and uplink transmission/reception.

Specifically, BM may include a beam measurement process of measuring the characteristics of a beamforming signal received from a base station or a UE, a beam determination process of determining a transmission beam (Tx beam) and a reception beam (Rx beam) of the base station or the terminal itself, a beam sweeping process of covering a spatial region using a transmit beam and/or a receive beam for a predetermined time interval in a predetermined manner, and a beam reporting process in which the UE reports information of the beam signal to the base station based on the beam measurement result.

While the above-described uplink/downlink BM process is performed, a beam mismatch problem may occur due to various factors. For example, when the UE moves or rotates, or when a radio channel environment is changed due to movement of a nearby object (e.g., when it was a line-of-sight (LoS) environment and then changed to a non-LoS environment as the beam was blocked), an optimal uplink/downlink beam pair may be changed. At this time, when the UE or the base station fails to track the changed optimal uplink/downlink beam pair (i.e., BM tracking), it may be considered that a beam failure has occurred.

The UE may determine whether beam failure has occurred based on the reception quality of a downlink reference signal (RS). In addition, the UE must report a report message on whether beam failure has occurred or a message for a beam recovery request (beam failure recovery request message, BFRQ message) to the base station. Upon receiving the message, the base station may perform a beam recovery process through various processes such as beam RS transmission or beam report request for beam recovery. This series of beam recovery processes is called a beam failure recovery (BFR) process.

The basic BFR operation includes a BFR process for a special cell (SpCell) (i.e., a primary cell, PCell) or a primary secondary cell (PScell) in which a contention-based PRACH resource exists. The BFR process may consist of a beam failure detection (BFD) process of the UE, a BFRQ transmission process, and a process of monitoring the response of the base station to the BFRQ, and each process may be performed in a serving cell.

### Beam failure detection (BFD)

When the quality value (Q_out) of all PDCCH beams falls below a predefined value, it may be considered that one beam failure instance has occurred. Here, the quality value may be determined based on a hypothetical block error rate (BLER). That is, the theoretical BLER may mean a probability that demodulation of the control information fails when the control information is transmitted on a specific PDCCH.

In addition, one or a plurality of search spaces for monitoring the PDCCH may be configured in the UE, and a PDCCH beam may be configured differently for each search space. In this case, when the quality values of all PDCCH beams fall below the predefined value, it means that the quality values of all PDCCH beams fall below the BLER threshold.

Two methods, which will be described later, may be supported as a method for the UE to receive an indication/configuration of a BFD-RS from the base station for determining whether a beam failure instance has occurred.

As a first method, an implicit configuration method of BFD-RS may be supported. A control resource set (CORESET) ID, which is a resource region in which the PDCCH may be transmitted, is configured in each search space, and RS information (e.g., CSI-RS resource ID, SSB ID) QCLed in terms of spatial RX parameters may be indicated/configured for each CORESET ID. In view of spatial reception parameters, the QCLed RS may be indicated or configured through transmit configuration information (TCI). That is, the BFD-RS may be implicitly configured/indicated to the UE based on QCL information indicated or configured through TCI.

Here, when the base station indicates or configures the RS (i.e., QCL Type D RS) that is QCL from the point of view of the spatial reception parameter to the UE, when the UE receives a specific PDCCH DMRS, the beam used for reception of the RS that is QCL from the point of view of the spatial reception parameter may be used. That is, a signal may be transmitted between spatially QCLed antenna ports through the same transmission beam or similar transmission beams (e.g., when beam widths are different while beam directions are the same/similar).

As a second method, an explicit configuration method of the BFD-RS may be supported. The base station may explicitly configure or indicate the UE to use the beam RS for BFD. In this case, the beam RS may correspond to the 'all PDCCH beams'.

The UE physical layer may inform the MAC sublayer that the BFI(beam failure instance) has occurred whenever an event in which the theoretical BLER measured based on the configured (or indicated) BFD-RS deteriorates beyond a specific threshold value occurs. And, when BFI occurs a certain number of times (e.g. 'beamFailureInstanceMaxCount') within a certain time (e.g., 'BFD timer'), the UE MAC sublayer may determine that a beam failure has occurred and initiate a related RACH operation.

### BFRQ (PRACH based): new beam identification and PRACH transmission

As described above, when more than a certain number of BFIs are generated, the UE may determine that a beam failure has occurred, and may perform a beam failure recovery operation. The UE may perform a BFRQ process based on RACH (i.e., PRACH) as an example of a beam failure recovery operation. Hereinafter, the corresponding BFRQ process will be described in detail.

When a beam failure occurs, the base station may configure a candidate beam RS list ('candidateBeamRSList') including replaceable candidate beam RSs to the terminal through RRC signaling. And, the base station may configure a dedicated PRACH resource for the candidate beam RSs. In this case, the dedicated PRACH resource may be a non-contention based PRACH resource (or a contention free PRACH resource). When an alternative beam RS is not found in the candidate beam RS list, the UE may select at least one of preset SSB resources. And, the UE may transmit a contention-based PRACH to the base station based on at least one selected.

### Enhanced beam failure recovery

When carrier aggregation (CA) is applied, there may be no uplink carrier (UL carrier) in a specific SCell. That is, in the case of an SCell having only a downlink carrier, uplink transmission is impossible. And, even if there is an uplink carrier in the SCell, the contention-based PRACH cannot be configured. Therefore, the PRACH-based BFR process to which CA is applied may be limitedly applied only to the SpCell (PCell or PSCell), and the BFR process may not be supported for the SCell. That is, according to the basic BFR operation, the PRACH-based BFR operation in the SpCell may not be supported in the SCell.

Specifically, when a high-frequency band requiring BFR is configured to the SCell, the PRACH-based BFR process may not be supported in the corresponding high-frequency band. For example, when the PCell is operated in a low frequency band (e.g., 6 GHz or less) and the SCell is operated in a high frequency band (e.g., 30 GHz), there is a problem that the PRACH-based BFR process is not supported in a high-frequency band that requires more BFR support.

In order to solve the above-mentioned problem, the improved BFR operation includes an operation for the BFR of the SCell. For example, the UE may perform BFRQ for the SCell by using a dedicated PUCCH resource for BFRQ configured in the SpCell. Hereinafter, the 'dedicated PUCCH resource' will be referred to as BFR-PUCCH for convenience of description.

The role of the BFR-PUCCH is to report only 'BF occurrence information for SCell' to the base station. And, detailed information related to the generated BF may be transmitted to the base station through the BFR MAC-CE or UCI as a subsequent report.

Here, the detailed information transmitted as the follow-up report may include information on the SCell(s) in which BF has occurred, whether or not there is a new candidate beam for the SCell(s) in which BF has occurred, and (if there is a new candidate beam) the corresponding beam RS ID.

In addition, the BFR-PUCCH may use the same PUCCH format as an SR (scheduling request), and may be defined through the ID of a specific SR for BFR use. If the UL-SCH allocated from the base station exists when the UE detects the BF for the SCell, the UE may omit the BFR-PUCCH transmission procedure like the SR transmission procedure, and transmit the BFR MAC-CE to the base station through the directly allocated UL-SCH.

In a multi-TRP environment, multi-DCI and/or single-DCI based TRP-specific BFR operations may be applied. First, the base station may explicitly or implicitly configure BFD RS for the UE. For example, the base station may configure two or more BFD-RS sets for the UE via RRC or/and MAC-CE. As another example, the BFD-RS sets may be configured based on the TCI status per CORESET pool. The UE may determine whether beam failure occurs per TRP based on the above-described BFD-RS sets.

When a beam failure is detected, SR PUCCH resources may be set for the UE according to the BFRQ resources of the base station. Separate SR PUCCH resources may be configured for each TRP, or the same SR PUCCH resource may be used by two TRPs. When a beam failure occurs in a specific TRP, the UE may transmit the set BFRQ SR PUCCH (to a TRP where beam failure does not occur). The TRP receiving the BFRQ may transmit a UL grant DCI to the UE, and the UE may transmit a BFR MAC-CE through the PUSCH scheduled/allocated by the UL grant DCI. The BFR MAC-CE may include a CC list where a beam failure occurred, information about a failed BFD RS set, information about whether a new beam has occurred, etc.

### PUCCH configuration and format

PUCCH may carry uplink control information (UCI). UCI may include SR, HARQ-ACK, CSI, etc. SR may be used to request UL-SCH resources. HARQ-ACK is a reception response signal for DL signals. HARQ-ACK response can include ACK, NACK (negative acknowledgment), DTX (discontinuous transmission), NACK/DTX. HARQ-ACK may be used interchangeably with A/N, ACK/NACK, and HARQ-ACK/NACK. HARQ-ACK can be generated per TB or per CBG.

PUCCH formats may be classified according to UCI payload size/transmission length (e.g., number of symbols constituting PUCCH resources)/transmission structure. PUCCH formats can be classified into short PUCCH (formats 0, 2) and long PUCCH (formats 1, 3, 4) according to transmission length.

For example, when the PUCCH format is 0, the supportable UCI payload size is at most 2 bits, and the number of OFDM symbols constituting a single PUCCH may be 1 to 2. As another example, when the PUCCH format is 2, the supportable UCI payload size is more than 2 bits, and the number of OFDM symbols constituting a single PUCCH may be 1 to 2.

As another example, when the PUCCH format is 1, the supportable UCI payload size is at most 2 bits, and the number of OFDM symbols constituting a single PUCCH may be from 4 to 14. As another example, when the PUCCH format is 3 or 4, the supportable UCI payload size is more than 2 bits, and the number of OFDM symbols constituting a single PUCCH can be from 4 to 14.

### Two-step uplink transmission scheme for event-based transmission

In describing the present disclosure, "/" means "and", "or", or "and/or", depending on the context. In addition, "beam" in the present disclosure may mean a source RS for a "spatial filter" or a "spatial relationship", and may be interpreted as a QCL (type-D) RS, a (DL/UL/joint) TCI state, or (in case of uplink) a spatial relationship RS.

In a wireless communication system, uplink control information based on layer-1 (e.g., physical layer) has the advantage of shorter transmission delay time than control information based on higher layers. For example, in order for a terminal to transmit some information to a base station through a MAC-CE or RRC message, an SR procedure of the terminal and a PUSCH allocation procedure of the base station (based on the SR) may be required, resulting in delay time and overhead. In addition, in general, the higher the layer information, the longer the time required to decode the information (e.g., decoding time or/and processing time).

On the other hand, in order to transmit layer-1 based uplink control information, UL physical channel resources (e.g., PUCCH, PUSCH) must be set/allocated (in advance) to the corresponding terminal. Therefore, from the base station/network perspective, as the number of terminals increases, the amount of UL resources to be allocated to each terminal may increase, and the overall UL resource overhead burden may increase accordingly.

Accordingly, in a wireless communication system, information that must be transmitted relatively urgently for the operation of the physical layer (e.g., SR (e.g., SR for PUSCH allocation), HARQ-ACK (e.g., HARQ-ACK for retransmission), CSI (e.g., CSI for scheduling/MCS/precoder decision), beam information (e.g., beam information for (analog) beam decision) can be transmitted and received as physical layer UCI.

Here, the base station and/or the network may determine/control the reporting time of HARQ-ACK, CSI, beam information, etc., excluding SR. If this NW (network)-initiated/triggered reporting procedure is applied, there is a limitation that in an environment where the wireless channel condition is likely to change rapidly/highly, the reporting time must be configured/indicated so that the terminal may transmit UCI frequently.

That is, in an environment where the wireless channel state changes rapidly, the UL resource overhead for UCI reporting and the related DL measurement RS overhead may increase, and there may be a problem that the power consumption of the terminal also increases due to frequent UL transmission of the terminal. Additionally or alternatively, the UL resource overhead may increase as the number of terminals within the cell/TRP coverage increases, since UL resources must be allocated to each terminal.

To overcome the limitations of these NW-initiated/triggered reports, UE-initiated/triggered reporting methods or event-based/triggered reporting methods can be applied.

When the UE-initiated/triggered reporting method or the event-based/triggered reporting method is applied, the terminal may decide whether/when to report (UCI, etc.). That is, the terminal can perform the (UCI) reporting only when necessary (e.g., only when a specific event occurs). Accordingly, the UL resource overhead and terminal power consumption can be reduced. In addition, since the terminal reports information based on layer-1/lower layers, faster reporting can be possible.

Accordingly, standardization of UE-initiated/triggered beam reporting methods may be pursued in next-generation wireless communication systems.

In addition, for efficient operation of UL resources in next-generation wireless communication systems, UE-initiated/triggered or event-based transmission schemes may be applied to control information, transport blocks (TBs), and user-plane data transmission procedures transmitted via UCI and/or MAC-CE.

The present disclosure relates to a method for more efficiently reporting "occurrence of an event and/or reporting information related to the event" in a UE-initiated/triggered reporting scheme or an event-based/triggered reporting scheme.

In the physical layer of a wireless communication system, the SR/BFRQ transmission procedure via the dedicated PUCCH/PRACH described above may be performed in an event-based or UE-initiated/triggered reporting manner. When the above-described method is applied, in order to minimize the amount of UL resources (e.g., PUCCH/PRACH) pre-allocated to each UE, only a small amount of information (e.g., whether an event occurred) may be transmitted based on the corresponding resources when an event occurs.

For example, a PRACH-based transmission procedure may be used when the occurrence of the event may cause a problem in UL synchronization, and a PUCCH-based transmission procedure may be used in other cases. Here, a format (e.g., PUCCH format 0/1) that can transmit a small amount of information (e.g., a small number of bits) based on relatively small UL resources in the format of PUCCH (e.g., SR PUCCH, BFRQ PUCCH) may be used.

When the terminal has a lot of information to transmit, such as in the BFR procedure, or when there is additional information to transmit, a PUSCH (resource) allocation procedure may be performed after the SR/BFRQ to enable the network to transmit the information in order to support the procedure. For example, the reporting procedure may be performed according to the three steps described below:
1) An operation where a terminal reports first information (e.g., information indicating that an event has occurred) to the network via pre-allocated/configured UL resources
2) An operation where a network allocates PUSCH resources to the terminal
3) An operation where a terminal reports second information (e.g., BFR MAC-CE for BFR procedure, etc.) to the network via PUSCH allocated by the network

Meanwhile, if the above procedure is applied to network-initiated/triggered periodic, aperiodic, and semi-persistent (SP) reporting procedures such as existing CSI/beam reporting, the problems described below may occur.

For example, when events occur simultaneously for multiple terminals and/or when uplink traffic demand is high, the PUSCH allocation procedure (i.e., operation 2) described above) may be delayed. Accordingly, the time required for the terminal to finally report information may be delayed.

As another example, it may take a time of "T1+T2+T3" after the terminal transmits the first information before transmitting the second information, where T1, T2 and T3 are as follows:
- T1: The time taken by the base station/NW to successfully complete detection and decoding of the first information.
- T2: Internal processing time of the base station for PUSCH resource allocation decision for the terminal (e.g., scheduling decision)
- T3: The time taken for a UL grant to be transmitted to a terminal (e.g., via PDCCH) and for the terminal to successfully complete detection/decoding of the UL grant.

Hereinafter, a two-step uplink transmission method for event-based transmission is described to solve the above-described problem.

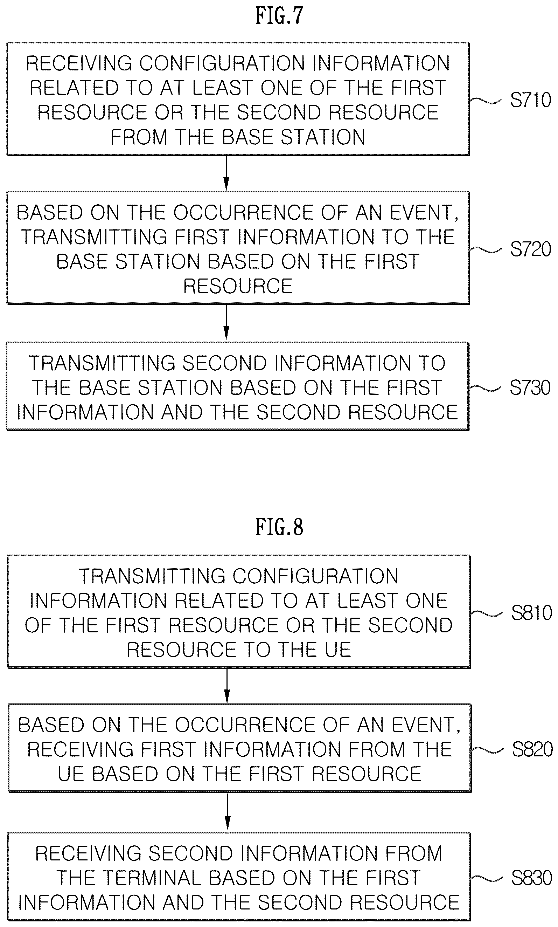

FIG. 7 is a flowchart illustrating a method for a user equipment (UE) to perform a communication procedure according to an embodiment of the present disclosure.

The UE may receive configuration information related to at least one of the first resource or the second resource from the base station (S710).

As an example of the present disclosure, first configuration information related to a first resource and second configuration information related to a second resource may be included in one configuration information, but is not limited thereto. The first configuration information and the second configuration information may be transmitted to the UE separately. The configuration information may be transmitted to the UE via upper layer signaling (e.g., RRC message, MAC-CE, etc.), but is not limited thereto.

Here, the allocation period of the first resource and the allocation period of the second resource may be the same, but are not limited thereto.

As an example of the present disclosure, the configuration information may include configuration information related to an event. The configuration information related to the event may also be included in the same configuration information as the first/second configuration information, but is not limited thereto. The configuration information related to the event may include conditions/criteria related to the occurrence of the event, the type of the event, information on the operation of the terminal when the event occurs, etc. The UE may monitor whether the event occurs based on the configuration information related to the event.

Based on the occurrence of an event, the UE may transmit first information to the base station based on the first resource (S720).

Here, the type of the event may be an event related to a transmission procedure. The transmission procedure may include a beam (failure) report, an uplink and/or downlink transmission procedure, etc. For example, if the transmission procedure is a beam report, the event related to the transmission procedure may include an event related to a beam failure. However, this is only one embodiment, and the type of the event may be set differently depending on the configuration information.

For example, the first information may include at least one of i) third information related to whether an event occurred or ii) fourth information related to at least one of the second resource or the second information.

For example, the third information may include information about an event and/or information indicating a second resource or/and channel (e.g., a channel based on the second resource) that includes the second information.

For example, the fourth information may include UE selection/decision information related to the second resource and/or information amount, type, and configuration information (e.g., information related to fields of the second information, etc.) about the second information. For example, the configuration information may include information about at least one resource candidate (e.g., candidates for the first resource and/or the second resource, etc.). The UE may select the second resource from among the at least one resource candidate, and the fourth information may include an index of the second resource.

Additionally or alternatively, the fourth information may include at least one of spatial filter information, location, length, format, sequence, or transmission method related to the second resource determined/selected by the UE.

The first resource may include at least one time resource, a frequency resource, and a space resource. The UE may repeatedly transmit the first information to the base station based on at least one time resource, a frequency resource, and a space resource. For example, if at least one time resource is spaced apart from each other, the UE may repeatedly transmit the first information to the base station on at least one spaced time resource.

As another example, a first plurality of spatial parameters (e.g., beam, spatial relationship information, spatial filter, etc.) may be configured for the first information. The UE may transmit the first information to the base station based on the first plurality of spatial parameters at the same time or frequency.

As an example of the present disclosure, retransmission of the first information may be restricted for a certain period of time after the UE transmits the first information. For example, if the UE transmits the first information in the first TO, retransmission of the first information may be restricted for a second period of time after the first TO (transmission occasion).

As an example of the present disclosure, the UE may receive ACK information for the first information from the base station. Here, the ACK information may be included in control information that activates at least one of the second resource or the second information. If the ACK information for the first information is received from the base station, the UE may transmit the second information. If the ACK information for the first information is not received from the base station, the UE may perform retransmission of the first information.

The UE may transmit second information to the base station based on the first information and the second resource (S730).

Here, the (minimum) interval (e.g., time gap) between the first TO for the first information and the second TO for the second information may be a first time period. The first time period may be predefined or may be configured or indicated by the base station. For example, the first time period may be included in the configuration information or may be included in separate control information transmitted by the base station. As another example, the UE may determine the first time period, and the first information may include information on the first time period determined by the UE. The first time period may be determined as an absolute time value, but may also be determined as relative time information (e.g., x symbols/slots, etc.) (where x is a natural number greater than or equal to 1).

The second resource may include at least one of a time resource, a frequency resource, and a space resource. The UE may repeatedly transmit the second information to the base station based on at least one of a time resource, a frequency resource, and a space resource. For example, if at least one of the time resources is spaced apart from each other, the UE may repeatedly transmit the second information to the base station on at least one of the spaced apart time resources.

As another example, a second plurality of spatial parameters (e.g., beam, spatial relationship information, spatial filter, etc.) may be configured for the second information. The UE may transmit the second information to the base station based on the second plurality of spatial parameters at the same time or frequency.

As an example of the present disclosure, retransmission of the second information may be restricted for a certain period of time after the UE transmits the second information. For example, if the UE transmits the second information in the second TO, retransmission of the first information may be restricted for a third period of time after the second TO.

Each of the first information and the second information may be transmitted to the base station via an uplink channel (e.g., PUCCH, etc.) or an uplink data channel (e.g., PUSCH, etc.). Each of the first information and the second information may be included in separate uplink control information, but is not limited thereto.

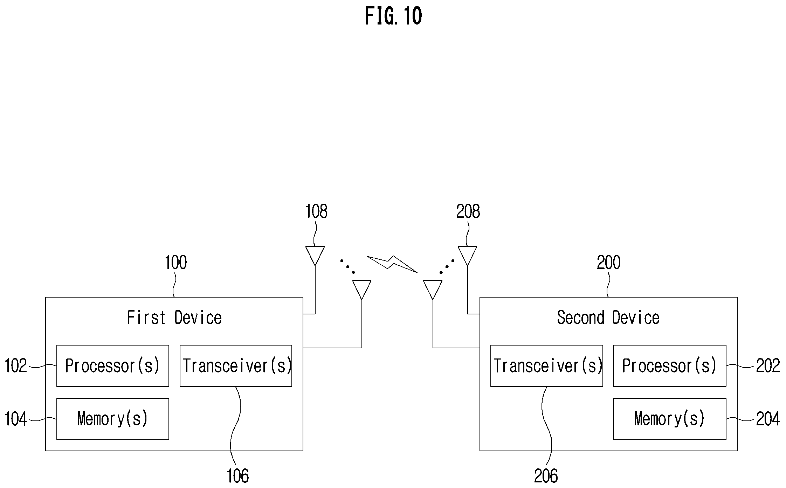

The method described in the example of FIG. 7 can be performed by the first device (100) of FIG. 10. For example, one or more processors (102) of the first device (100) of FIG. 10 may receive configuration information related to at least one of the first resource or the second resource from the base station through one or more transceivers (106). Based on the occurrence of an event related to the transmission procedure, the one or more processors (102) may transmit first information to the base station through one or more transceivers (106) based on the first resource. The one or more processors (102) may transmit second information to the base station through one or more transceivers (106) based on the first information and the second resource.

Furthermore, one or more memories (104) of the first device (100) may store commands for performing the method described in the example of FIG. 7 or the examples described below when executed by one or more processors (102).

FIG. 8 is a flowchart illustrating a method for a base station to perform a communication procedure according to an embodiment of the present disclosure.

The base station may transmit configuration information related to at least one of the first resource or the second resource to the UE (S810).

For example, the base station may configure the allocation cycles of the first resource and the second resource to the same value, but is not limited thereto.

Based on the occurrence of an event, the base station may receive first information from the UE based on the first resource (S820).

The configuration of the first information and the first resource has been described above, so a duplicate description will be omitted. The base station may efficiently identify whether an event has occurred and the second information/second resource to be transmitted by the UE through the first information.

The base station may receive second information from the terminal based on the first information and the second resource (S830).

The method described in the example of FIG. 8 can be performed by the second device (200) of FIG. 10. For example, one or more processors (202) of the second device (200) of FIG. 10 may transmit configuration information related to at least one of the first resource or the second resource to the terminal through one or more transceivers (206). Based on the occurrence of an event related to the transmission procedure, the one or more processors (202) may receive first information from the terminal through one or more transceivers (206) based on the first resource. The one or more processors (202) may receive second information from the terminal through one or more transceivers (206) based on the first information and the second resource.

Furthermore, one or more memories (204) of the second device (200) may store commands for performing the method described in the example of FIG. 8 or the examples described below when executed by one or more processors (202).

Hereinafter, a two-step uplink transmission method for event-based transmission is described in more detail.

### Embodiment 1

Embodiment 1 relates to a two-step uplink transmission procedure for event-based transmission and a configuration of information allocated and/or transmitted in the two-step uplink transmission procedure.

As an example of the present disclosure, a base station may (periodically) allocate/configure two uplink resources, a first resource and a second resource, in a TDM format for a predetermined time interval or longer to a terminal. Here, the periods associated with each of the first resource and the second resource (e.g., the period for allocating/configuring the first resource and/or the second resource, the effective period of the first resource and/or the second resource, etc.) may be the same, but are not limited thereto, and may be different from each other.

The UE may transmit first information to the base station based on the first resource, and may transmit second information to the base station based on the second resource. Here, the first information may include at least one of information on whether an event has occurred or whether the second resource/second information has been transmitted. Here, the first information may be determined based on whether the first resource has been transmitted and/or information transmitted through the first resource. Whether the second resource/second information has been transmitted may be determined by the first information.

Specifically, the first information may be configured/set via a transmission bit transmitted via the first resource.

Additionally or alternatively, the first information may include information that is (implicitly) transmitted/determined by the UE's selection/decision/transmission of the configured first resource (or candidate for the first resource). For example, if the base station configures the first resource to be transmitted when an event occurs and the first resource to be transmitted when an event does not occur to the UE by distinguishing them, the base station may determine whether an event has occurred in the terminal based on the first resource/first information transmitted by the UE. As another example, if the base station sets only the first resource to be transmitted when an event occurs in the UE, the base station may determine whether an event has occurred in the UE based on whether the UE has transmitted the first resource/first information.

As an example of the present disclosure, the first resource may be configured as a resource containing/configuring/mapped with a relatively small amount of information (e.g., 1 to 2 bits, etc.). For example, the first resource may include a sequence resource (e.g., a DM-RS sequence, a ZC sequence, etc.) and/or an RS resource (e.g., an SRS resource, NR PUCCH format 0, etc.).

For example, by configuring/indicating the transmission on/off of one sequence/RS through the first resource, the base station may check whether the second resource is in use. As another example, if two sequences/RSs are allocated/configured through the first resource, sequence/RS 1 may indicate that the second resource is in use, and sequence/RS 2 may indicate that the second resource is not in use.

In another example of the present disclosure, the first resource may include a PRACH preamble. For example, by configuring/indicating on/off transmission of one PRACH preamble through the first resource, the base station may check whether the second resource is in use.

In another example of the present disclosure, whether or not to use the second resource may be indicated depending on the transmission for specific RE(s). For example, whether or not to use the second resource may be notified to the base station depending on whether the UE has loaded transmission power/energy on the RE(s) set as the first resource. The base station may receive the first information by detecting energy for the RE(s). For example, if energy is detected for the RE(s), the base station may determine that the second resource is being used. And, if energy is not detected for the RE(s), the base station may determine that the second resource is not being used. The opposite case may also be applied/utilized.

As another example of the present disclosure, the UE may modulate (e.g., BPSK, QPSK, QAM) information bit(s) (e.g., bits of first information/first resource, etc.), apply sequence modulation that multiplies a specific sequence and/or code thereto, and then transmit the same to the base station (together with DMRS). As an example, the UE may transmit the resource/information to which the sequence modulation that multiplies a specific sequence and/or code is applied to the resource/information to which the sequence modulation that multiplies a specific sequence and/or code is applied to the resource/information to the base station via NR PUCCH format 1, but is not limited thereto.

As another example of the present disclosure, the UE may perform channel coding and modulation on information bit(s) and transmit them to the base station together with the DMRS. Here, the information bit(s) on which channel coding and modulation were performed may be transmitted to the base station through NR PUCCH format 2, 3, 4 or PUSCH, but is not limited thereto.

Meanwhile, from the perspective of the network/base station, if multiple terminals transmit the first resource simultaneously and collision/interference occurs, the reception quality of the first resource/first information may deteriorate. To prevent this, when the base station allocates the first resource to multiple UEs, it may allocate different quasi-orthogonal resources to each of the multiple UEs.

The second resource may include a resource capable of transmitting a larger amount of information than the first resource (when transmitting information through the resource). Additionally or alternatively, the second resource may include a resource that occupies/includes more time, frequency, sequence, code, space (e.g., layer, port, etc.) resources than the first resource. For example, the second resource may include a PUCCH (e.g., NR PUCCH format 2, 3, 4) resource or a PUSCH resource capable of transmitting more than 2 bits of information.

The information transmitted via the second resource may include physical layer control information (e.g., UCI) or upper layer control information (e.g., MAC-CE, RRC, etc.). Additionally or alternatively, the second resource may include (urgent/important) user plane data (e.g., TB). In this case, the first resource may include information related to whether the second resource transmits data. Here, the event may include a data/TB transmission event (via the second resource).

As an example of the present disclosure, the second resource may be a resource that is transmitted/set at a certain time interval (e.g., one or more slots) apart from the first resource. Depending on whether the first resource is transmitted or the report information transmitted from the first resource, the first resource and the second resource may be separated from each other by a certain time interval so that the base station may allocate the second resource (e.g., a part of the second resource) or the time, frequency, space (e.g., layer, port, etc.) resource location occupied by the resource to another terminal.

The time interval described above may be a predefined value (e.g., a standardized value), but is not limited thereto. The time interval between the first resource and the second resource may be set by the base station, or determined/selected by the terminal. In addition, the time interval described above may be an absolute time (e.g., time in msec units, etc.) or a relative time (e.g., time in slot/symbol units, etc.) that may vary depending on the SCS, DL/UL configuration.

If the time gap between the first resource and the second resource is configured/indicated/defined as a relative time, the gap between the first resource and the second resource may not be constant depending on the DL and UL slot/sub-frame configuration in the TDD system. For example, the first resource and the second resource are set to have a 1 slot gap, and it is assumed that the DL/UL is set as "DUDUUUDDUU". In this case, when the slot positions of the first resource and the second resource are represented as U1 and U2, respectively, the resource gaps of the first first resource-second resource pair and the second first resource-second resource pair may be 2 slots and 3 slots, respectively, as in "DU1DUU2U1DDUU2".

When the terminal determines/selects a time interval, the range/candidate of values that the terminal can determine may be set by the base station or defined in advance (as a standard). The terminal may include the determined/selected time interval value in the first information, and transmit the first information to the base station based on the first resource.

Even if the second resource is not allocated to each terminal in the form of a (quasi-)orthogonal resource, the second resource may be a resource that can resolve a collision between multiple terminals for a given period of time after receiving the first resource/first information from the network/base station perspective. The second resources at the same location may be allocated to multiple terminals, and thus, the system overhead of the second resource can be small.

Examples of the first resource and the second resource may be, but are not limited to, the following. The examples and configurations of the first resource and the second resource may be implemented in various ways as described above.

Example 1: PUCCH format 0/1 or PRACH preamble may be used as a first resource, and PUCCH format 2/3/4 may be used as a second resource.

Example 2: PUCCH format 0/1 or PRACH preamble may be used as a first resource, and CG (configured grant) PUSCH may be used as a second resource. In this case, control-plane data or user-plane data such as MAC-CE or RRC may be transmitted through PUSCH.

Example 3: A DMRS sequence may be used as a first resource, and a PUCCH or PUSCH resource may be used as a second resource.

### Embodiment 1-1

Example 1-1 relates to the configuration of first information and second information. The first information may include information related to the second resource and/or second information as well as whether the second resource/second information is transmitted.

For example, the first information may include selection/decision information of a terminal related to the second resource, which is specifically described with reference to Embodiment 1-1-1. Additionally or alternatively, the first information may include at least one of information amount, type, configuration, and urgency for the second information, which is specifically described with reference to Embodiment 1-1-2.

### Embodiment 1-1-1

Embodiment 1-1-1 relates to selection/decision information of a terminal related to a second resource included in the first information.

As an example of the present disclosure, the base station may configure a plurality of second resource candidates for the terminal, and the terminal may select at least one of the second resource candidates and transmit second information to the base station based on the selected at least one resource. Here, the first information may include information on the second resource selected by the terminal among the second resource candidates set by the base station (e.g., an index of the second resource selected by the terminal, etc.).

Additionally or alternatively, the base station may not configure some configuration values for the second resource transmission to the terminal, and the terminal may determine some configuration value(s) related to the second resource transmission. Here, some configuration values may include at least one of time/frequency location of the second resource (e.g., time interval between the first resource and the second resource, RB index), time/frequency/encoded bit quantity/length of the second resource (e.g., N symbols/slots, M subcarriers/RB, encoded bit size between N1 bits and N2 bits), resource format of the second resource (e.g., PUCCH format), transmission method of the second resource (e.g., whether SFN is transmitted), information related to whether/method/repetition of repeated transmission of the second resource (e.g., number of repetitions, repetition scheme (e.g., TDM, FDM, SDM)), layer/port index of the second resource, sequence/code related configuration value of the second resource (e.g., OCC), MCS level of the second resource, beam/spatial filter related information (e.g., TCI, spatial relationship information) (receiving the second resource), or TRP related information (e.g., CORESETpool index, SSB index) (receiving the second resource). The first information may include information related to configuration value(s) for the second resource determined/selected by the terminal.

### Embodiment 1-1-2

Embodiment 1-1-2 relates to information related to second information included in first information. When an event occurs, the amount of information, type of information, and configuration information (e.g., configuration of information fields and/or amount of information/bits of each information field) of second information to be transmitted by the terminal may vary depending on the situation of the terminal. Since the amount of information, type of information, and configuration information of second information are included in the first information, ambiguity that may occur when the base station interprets the second information from the second resource may be eliminated/reduced.

As described in Embodiment 1, when Embodiment 1-1 is applied, the first information (or a part of the first information) may include information implicitly conveyed by selection/decision/transmission of the terminal for the configured first resource (or candidate for the first resource)(s). For example, if a specific first resource is configured/determined according to the information amount/type of the second information or the MCS of the second resource, resource allocation, the base station may check the information amount/type of the second information or the MCS of the second resource, resource allocation information, etc. according to the first resource selected/transmitted by the terminal.

### Embodiment 1-2

Embodiment 1-2 relates to a method for improving the reception performance of a first resource.

If the base station fails to normally receive the first resource, the base station may not be able to predict the transmission of the second resource based on the first resource. In this case, the transmission of the second resource may act as a strong interference signal at the corresponding resource location. Embodiment 1-2 relates to a method for improving the transmission/reception performance of the first resource to resolve this. At least one of the options described below may be used to improve the transmission/reception performance of the first resource. The options described below may be used in combination or alone.

Option 1: The base station may transmit an ACK for the first resource or/and the first information to the terminal. Here, the ACK information may be transmitted from the base station to the terminal before the second resource or/and the second information are transmitted. The terminal may transmit the second resource to the base station after confirming the ACK for the first resource or/and the first information. For example, if the ACK is not confirmed, the terminal may not transmit the second resource or/and the second information and may retransmit the first information to the base station at the next transmission occasion of the first resource.

Here, the ACK for the first resource or/and the first information may be a trigger/activation message/signal for the second resource or/and the second information. For example, the activation DCI for the second resource, such as semi-static CSI reporting on PUCCH, SPS PUSCH, may be utilized as the ACK.

When the terminal receives an ACK message and transmits the second resource, even if there is no separate deactivation/release indication from the base station for the second resource, the second resource may be stipulated/defined to be activated only for a certain period of time or during a transmission occasion. For example, the second resource may be considered/defined to be activated until the next first resource transmission occasion comes. As another example, the second resource may be considered/defined to be activated only at one point in time/transmission occasion.

Option 2: The terminal may repeatedly transmit the first resource and/or the first information using different time/frequency/spatial resources (before transmitting the second resource/second information). Additionally or alternatively, the terminal may transmit the same signal (e.g., UL SFN scheme) (e.g., the first resource and/or the first information) on the same time/frequency/spatial resources based on multiple panels/beams (e.g., TCI/spatial relationships).

The probability of transmitting and receiving the first information can be increased through repeated transmission of the first resource described above, simultaneous transmission of multiple panels, etc.

Option 3: The base station may configure multiple first resources having/configuring different uplink transmission parameters (e.g., beam (e.g., UL TCI, spatial relationship), transmission power, and/or timing advance) or multiple parameter candidate values of the same first resource to the terminal. Accordingly, the terminal may select appropriate resource(s)/parameter(s) from among the above-described resources or parameter candidate values, and transmit the first resource or/and the first information to the base station based on the selected resource(s)/parameter(s).

According to the above-described options, the terminal can selectively apply beams, transmission power, timing advance, etc. for the first resource appropriately according to the occurrence of an event situation. Accordingly, the probability of transmission and reception of the first information can be increased.

### Embodiment 1-3

Embodiment 1-3 relates to a method for increasing the transmission/reception probability of the second resource. The base station may normally receive the first resource, but may not normally receive the second resource. In order to increase the reception probability of the second resource, at least one of the options described in Embodiment 1-2 may be applied to the second resource.

For example, the base station may transmit an ACK for the second resource and/or the second information to the terminal. If the ACK is not received, the terminal may retransmit the second resource and/or the second information to the base station.

As another example, the terminal may repeatedly transmit the second resource or/and the second information using different time/frequency/spatial resources. As another example, the terminal may transmit the same signal (e.g., UL SFN method) (e.g., the second resource or/and the second information) using the same time, frequency, and spatial resources based on multiple panel beams (e.g., TCI/spatial relationships).

As another example, the base station may configure a plurality of second resource(s) or multiple parameter candidate values of the same second resource for the terminal having different uplink transmission parameters (e.g., beam, transmit power and/or timing advance). The terminal may select appropriate resource(s)/value(s) from among the above-described resources or/and parameter candidate values, and transmit the second resource or/and second information to the base station based on the selected resource(s)/value(s).

In addition, the base station may recognize a decoding failure situation for the second resource through normal reception of the first resource. Here, the base station may transmit report triggering or PUSCH scheduling information (for performing related reporting) to the terminal.

As another example, when repeating transmission of the first resource or/and the second resource, frequency location hopping may be performed/applied to obtain frequency diversity or to randomize interference.

Additionally or alternatively, even if the reception of the first resource and the second resource is performed normally, the base station may not promptly perform a related procedure (e.g., a procedure for changing a beam when the event that occurred to the terminal is a beam (failure) related event) (at least for one reason). In this case, the terminal may determine that the base station has not performed the reception of the first resource and/or the second resource normally and may repeatedly transmit the first resource and/or the second resource to the base station. Accordingly, unnecessary terminal power consumption may occur.

To prevent such cases, a restriction may be defined/configured/indicated for the terminal not to perform retransmission for the first resource and/or the second resource for a certain period of time after transmission of the first resource and/or the second resource. Here, the restriction may include a time or resource restriction related to retransmission for the first resource and/or the second resource. For example, if the second resource is transmitted by the terminal in slot n (where n is an integer greater than or equal to 0), the terminal may be restricted from transmitting the first resource for x slots, y msec, or z transmission occasion(s) based on slot n.

The above-described embodiments relate to a method in which the first resource and second resource transmission methods are separately performed for an event-based transmission/reception procedure. The method described in the above-described embodiments can also be extended/applied to an event-based transmission/reception procedure to which three or more UL resource transmission methods are applied.

Here, the nth resource (n>2) may be a resource pre-allocated/set by the base station, such as the first resource and the second resource, or a resource triggered by the base station. For example, after transmitting the second information through the second resource (after a certain period of time and/or by a base station trigger), the third information may be transmitted through the third resource.

In the above-described embodiment(s) of the present disclosure, "whether an event has occurred" may be reported through a first resource, and "information related to the event" may be reported through a second resource. There is a characteristic that the amount of information of the second resource may change depending on the amount of information transmitted through the first resource. Therefore, when transmitting specific information, it may be distinguished into first information having a fixed number of bits and second information having a variable number of bits depending on the first information. In addition, it may be generalized/extended and applied in a manner in which the first information is transmitted through the first resource, and the second information is transmitted through the second resource. For example, a two-part encoding technique applied to NR CSI may be applied to an event-based reporting procedure.

The above-described embodiments of the present disclosure can be applied not only to information reported to the network/base station as physical layer-based signal/information (e.g., CSI, L1-RSRP/SINR, HARQ-ACK), but also to information reported to the network/base station as upper layer-based signal/information. For example, when RRM/RLM related reporting is performed according to an event-based reporting procedure, the above-described embodiments of the present disclosure can be applied. In addition, the above-described embodiments of the present disclosure can be applied to TB (transport block) transmission. For example, the first information may include information related to SR, and the second information can include a TB according to the SR.

The above-described embodiments relate to a method of setting up two resources for event reporting (and/or additional information) in a manner different from the event-based reporting method in a basic wireless communication system. Accordingly, the above-described three-step reporting method can be simplified to the following one-step reporting method:
- The terminal may transmit first information (e.g., information related to an event occurrence) to the base station through the first resource among the two pre-allocated/configured UL resources, and (after a certain time interval) transmit second information (e.g., BFR MAC-CE in the BFR procedure) to the base station through the second resource.

Accordingly, the problem of delay time until completion of the second information report, which is a problem/limitation of the existing 3-step reporting method, can be resolved.

Meanwhile, the first information and the second information may be transmitted at the same time. Specifically, the terminal may transmit the first information and the second information together to the base station based on one UL resource that is pre-allocated/configured. In the case of the above-described method, since the base station cannot predict when the terminal will transmit information through one UL resource or whether an event occurs, the resource overhead from the base station's perspective may increase proportionally according to the number of terminals. When an event of the terminal occurs, not only the first information but also the second information must be completely transmitted, so the amount of time/frequency/space/code resources required for "one UL resource" cannot but be large, and therefore there is a limitation/disadvantage that the UL resource overhead is large.

According to various embodiments of the present disclosure, the first resource has resource properties, but the UL resource overhead can be reduced by limiting the amount of information transmitted according to the resource.

Although the amount of time/frequency/space/code resources required for the second resource in the present disclosure may be large, the base station can determine whether transmission related to the second resource is performed through detection/decoding/reception of the first resource. Accordingly, when the terminal does not use the second resource (e.g., when no event occurs), the resource can be allocated to another terminal, and overhead from a system perspective can be reduced.

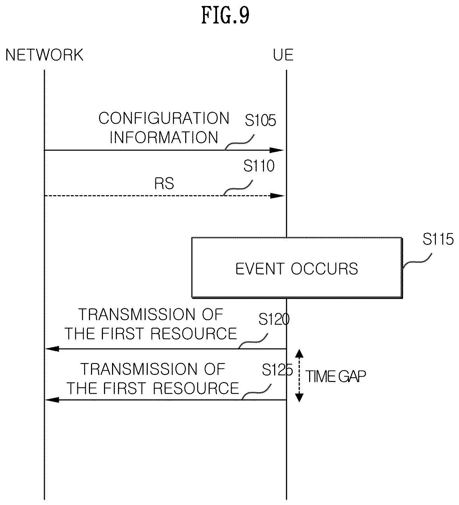

FIG. 9 is a diagram for describing a signaling procedure of a network side and a terminal according to one embodiment of the present disclosure.

FIG. 9 shows an example of signaling between a network side and a terminal (UE) in an M-TRP situation to which the embodiments of the above-described disclosure (e.g., one or more combinations of Embodiment 1, Embodiment 1-1, Embodiment 1-1-1, Embodiment 1-1-2, Embodiment 1-2, Embodiment 1-3 or/and detailed embodiments thereof) may be applied.

Here, the UE/network side is an example and may be replaced with various devices as described with reference to FIG. 10. FIG. 9 is for convenience of explanation and does not limit the scope of the present disclosure. Additionally, some step(s) shown in FIG. 9 may be omitted depending on the situation and/or settings. Additionally, in the operation of the network side/UE in FIG. 9, the above-described uplink transmission/reception operation, M-TRP-related operation, etc. may be referenced or used.

In the following description, the network side may be one base station including multiple TRPs, or may be one cell including multiple TRPs. Alternatively, the network side may include a plurality of remote radio heads (RRH)/remote radio units (RRU).

For example, ideal/non-ideal backhaul may be set between TRP 1 and TRP 2, which constitute the network side. In addition, the following description is based on multiple TRPs, but it can be equally extended and applied to transmission through multiple panels/cells, and can also be extended and applied to transmission through multiple RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station(gNB, etc.), etc. As described above, a TRP may be classified according to information on a CORESET group (or a CORESET pool) (e.g., a CORESET index, an ID).

For example, if a single UE is configured to transmit and receive with multiple TRPs (or cells), this may mean that multiple CORESET groups (or CORESET pools) are configured for the single terminal. The configuration of such CORESET groups (or CORESET pools) may be performed via higher layer signaling (e.g., RRC signaling, etc.).

In addition, a base station may generally mean an object which performs transmission and reception of data with a terminal. For example, the base station may be a concept which includes at least one TP(Transmission Point), at least one TRP(Transmission and Reception Point), etc. In addition, a TP and/or a TRP may include a panel, a transmission and reception unit, etc. of a base station.

The UE may receive configuration information related to at least one of the first resource, the first information, the second resource, or the second information from the network (S105).

As an example of the present disclosure, the configuration information may include time, frequency, and spatial resource-related information of the first resource and/or the second resource, beam/TRP-related information, format information (e.g., format information of a channel for transmitting the first/second resource/information), MCS information, and the like. Additionally or alternatively, the configuration information may include event-related configuration information (e.g., a type of RS related to an event, a type of the event, and the like), information related to a resource transmission triggering condition, information related to a configuration of the first/second information, and the like.

The above configuration information may be transmitted from the network to the terminal via upper layer signaling (e.g., system information, RRC message, MAC-CE, etc.), but is not limited thereto.

The network may transmit RS (e.g., CSI-RS, SSB, etc.) related to the event to the UE based on the configuration information (S110). The UE may perform a measurement operation on the received RS. The UE may monitor whether an event has occurred, etc. based on the measurement result on the received RS (S120).

As an example of the present disclosure, depending on the characteristics/definition/setting of the triggering condition of the event or the first resource/second resource, the event/condition may not be related to RS reception/measurement. In this case, the S110 procedure may be omitted. For example, if user-plane data is transmitted as the second information, the event/condition may be related to the internal situation of the terminal (e.g., data arrival, buffer, etc.), and the S110 procedure may be omitted.

When an event occurs, the UE may transmit first information to the network based on the first resource (S125). Then, the UE may transmit second information to the network based on the second resource (S130). For example, the UE may transmit first information and then transmit second information after a certain time interval. The first information and/or second information of the UE may be based on setting information to be transmitted by the network.

### General Device to which the Present Disclosure may be applied

FIG. 10 is a diagram which illustrates a block diagram of a wireless communication system according to an embodiment of the present disclosure.

In reference to FIG. 10, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology (e.g., LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology (e.g., LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206.

One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts included in the present disclosure. One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN(personal area networks) related to a small/low-power digital communication based on a variety of standards such as IEEE 802.15.4, etc. and may be referred to as a variety of names.

### [Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving, by a user equipment (UE), configuration information related to at least one of a first resource or a second resource from a base station;
based on an occurrence of an event, transmitting, by the UE, first information to the base station based on the first resource; and
transmitting, by the UE, second information to the base station based on the first information and the second resource,
wherein the first information includes at least one of i) third information related to whether the event has occurred or ii) fourth information related to at least one of the second resource or the second information, and
wherein a minimum interval between a first transmission occasion (TO) for the first information and a second TO for the second information is a first time period.

2. The method of claim 1, wherein:
the first time period is predefined or configured or indicated by the base station.

3. The method of claim 1, wherein:
the first information includes information on the first time period determined by the UE.

4. The method of claim 1, wherein:
the configuration information includes information on at least one resource candidate, and
the fourth information includes an index of the second resource selected by the UE among the at least one resource candidate.

5. The method of claim 1, wherein:
the fourth information includes at least one of spatial filter information, location, length, format, sequence, or transmission method related to the second resource determined by the UE.

6. The method of claim 1, wherein:
the fourth information includes at least one of a size and type of the second information or information related to a field of the second information.

7. The method of claim 1, wherein:
based on acknowledgement (ACK) information for the first information being transmitted from the base station to the UE, the second information is transmitted from the UE to the base station, and
based on the ACK information for the first information not being transmitted from the base station to the UE, retransmission of the first information is performed by the UE.

8. The method of claim 7, wherein:
the ACK information is included in control information which activates at least one of the second resource or the second information.

9. The method of claim 1, wherein:
retransmission of the first information is restricted during a second time period after the first TO, and
retransmission of the second information is restricted during a third time period after the second TO.

10. The method of claim 1, wherein:
each of the first resource and the second resource includes at least one time resource, a frequency resource and a space resource, and
each of the first information and the second information is repeatedly transmitted to the base station based on the at least one time resource, a frequency resource and a space resource.

11. The method of claim 1, wherein:
the first information is transmitted to the base station based on a first plurality of spatial parameters configured in the first information or the first resource, and
the second information is transmitted to the base station based on a second plurality of spatial parameters configured in the second information or the second resource.

12. The method of claim 1, wherein:
an allocation period of the first resource and an allocation period of the second resource based on the configuration information are same.

13. The method of claim 1, wherein:
each of the first information and the second information is transmitted to the base station through an uplink control channel.

14. A user equipment (UE) comprising:
at least one transceiver; and
at least one processor connected to the at least one transceiver,
wherein the at least one processor is configured to:
receive, through the at least one transceiver, configuration information related to at least one of a first resource or a second resource from a base station;
based on an occurrence of an event, transmit, through the at least one transceiver, first information to the base station based on the first resource; and
transmit, through the at least one transceiver, second information to the base station based on the first information and the second resource,
wherein the first information includes at least one of i) third information related to whether the event has occurred or ii) fourth information related to at least one of the second resource or the second information, and
wherein a minimum interval between a first transmission occasion (TO) for the first information and a second TO for the second information is a first time period.

15. A method comprising:
transmitting, by a base station, configuration information related to at least one of a first resource or a second resource to a user equipment (UE);
based on an occurrence of an event, receiving, by the base station, first information based on the first resource from the UE; and
receiving, by the base station, second information from the UE based on the first information and the second resource,
wherein the first information includes at least one of i) third information related to whether the event has occurred or ii) fourth information related to at least one of the second resource or the second information, and
wherein a minimum interval between a first transmission occasion (TO) for the first information and a second TO for the second information is a first time period.

16. A base station comprising:
at least one transceiver; and
at least one processor connected to the at least one transceiver,
wherein the at least one processor is configured to:
transmit, through the at least one transceiver, configuration information related to at least one of a first resource or a second resource to a user equipment (UE);
based on an occurrence of an event, receive, through the at least one transceiver, first information based on the first resource from the UE; and
receive, through the at least one transceiver, second information from the UE based on the first information and the second resource,
wherein the first information includes at least one of i) third information related to whether the event has occurred or ii) fourth information related to at least one of the second resource or the second information, and
wherein a minimum interval between a first transmission occasion (TO) for the first information and a second TO for the second information is a first time period.

17. A processing device configured to control a user equipment (UE), the processing device comprising:
at least one processor; and
at least one computer memory operatively connected to said one or more processors and storing instructions for performing a method according to any one of claims 1 to 13 based on execution by said one or more processors.

18. At least one non-transitory computer readable medium storing at least one instruction,
at least one command are executed by at least one processor to control the device to perform a method according to any one of claims 1 to 13.
